# EUROPEAN PATENT APPLICATION

(11) **EP 3 444 766 A1**
(43) Date of publication of application: **20.02.2019**
(21) Application number: 17186584.3
(22) Date of filing: 17.08.2017
(51) Int. Cl.: G06Q 20/10, G06Q 20/38

(54) **METHOD AND SYSTEM FOR CHARGEBACK PREVENTION**

(71) Applicant: MASTERCARD INTERNATIONAL, INC., Purchase, NY 10577-2509 (US)
(72) Inventor: GROARKE, Peter, Dublin, 18 (IE); SEXTON, Conor, Dublin, 14 (IE); FINN, Stephanie, Bray, County Wicklow (IE)
(74) Representative: Murgitroyd & Company

(57) **Abstract**

Provided are a computer-implemented method and device for chargeback prevention in a payment card transaction, the method comprising operating a processor associated with a user device with which the payment card is associated to: receive a user selection of an item to be purchased; render a graphical representation of the item for the user; receive a user purchase authorisation based on the graphical representation; and transmit a transaction request for the item to an electronic transaction terminal, the transaction request comprising the user purchase authorisation.

## Description

### Field of the Invention

The present disclosure relates to payment card transactions. More particularly, the present disclosure relates to a method and system for preventing chargeback in a payment card transaction.

### Background of the Disclosure

Electronic commerce, such as online shopping, has been increasingly common since the beginning of the Internet. Online shopping websites generally provide a user interface for customers to select items or services for purchase. After the customer has selected items for purchase, the customer typically can choose from multiple payment/credit options to purchase the products. Two conventional payment/credit options supported by online merchants include using a financial account, for example, a credit card or current account, and using a third party payment service provider. The customer typically enters details of their credit or debit card in the user interface when purchasing items.

Lately, there has been growing interest in electronic or "cash-less" retail payment systems which do not rely on traditional credit or debit cards. Such systems can expedite payment. Electronic commerce transactions can be effected by using a digital wallet, which refers to an electronic device that allows an individual to make electronic purchases. This can include purchasing items on-line with a computer or using a mobile device to purchase something at a store. Increasingly, digital wallets are being made not just for basic financial transactions but also to authenticate the holder's credentials. For example, a digital wallet can be used to verify the age of the purchaser.

The ability to make payments using mobile devices provides a further advantage in that the consumer does not have to carry physical funding instruments, such as credit cards, cash, and debit cards. Conventional systems for making electronic retail payments include "contactless" credit and debit card systems, which are proprietary systems developed by banks and/or credit card companies that use electronically-equipped cards or other electronic devices capable of transmitting and receiving radio frequency (RF) signals. Such system provides cardholders with a more user-friendly means of completing a credit/debit transaction by bringing a contactless-enabled payment card or other payment device, such as a key fob, proximal to a point-of-sale terminal reader, rather than swiping or inserting a card.

In a typical transaction using a credit or debit card, a cardholder wishing to complete a transaction (or make a payment) provides a card number together with other card details (such as a card expiry date, card code verification (CCV) number etc.) to a merchant at a point of sale (POS). The merchant transmits the card number and the details to an 'acquirer', i.e. a financial institution that facilitates and processes card payments made to the merchant. The acquirer then transmits an authorization request via a payment card network to an issuer or provider of the card used to make the payment. An electronic transaction terminal may include a point of sale (POS), i.e., the location where a retail transaction takes place, or an automated teller machine (ATM) where a cardholder withdraws cash or conducts other transactions.

The issuer processes the received request and determines whether or not the request is allowable. If the issuer determines that the payment request is allowable, an authorization response is transmitted via the payment card network to the acquirer and transfer of the payment amount to the merchant's account is initiated. Responsive to receiving the authorization response from the issuer, the acquirer communicates the authorization response to the merchant. In this manner, a card number may be used to effect a card payment to a merchant.

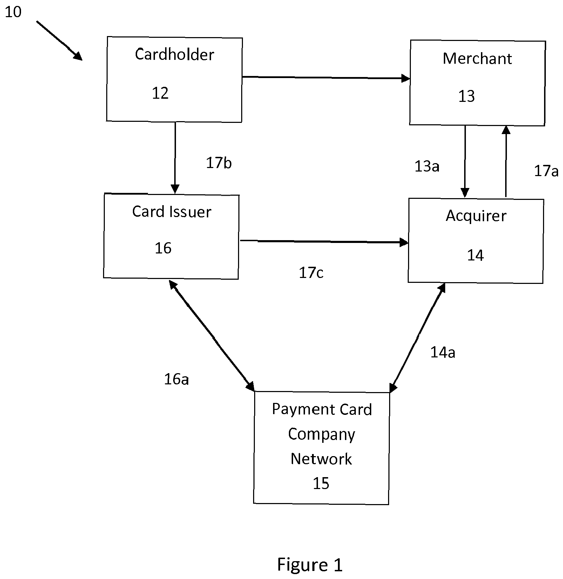

Figure 1 illustrates a payment card system 10 for conducting a typical transaction in a 4-party payment network. Referring to Figure 1, a card holder 12 submits a payment card to a merchant 13. A POS device 13a is configured to communicate with an acquirer 14, which functions as a payment processor. The acquirer 14 initiates 14a a transaction on a payment card company network 15. The payment card company network 15, which may include a financial transaction processing company, routes 16a the transaction to a card issuer 16. The card issuer 16 may be identified using information in the transaction message. The card issuer 16 approves or denies an authorisation request, and then routes, via the payment card company network 15, an authorization response back to the acquirer 14. The acquirer 14 sends approval to the merchant 13 via the POS device 13a. If the transaction is approved, the card holder 12 completes the purchase and may receive a receipt. The transaction is subsequently cleared and settled resulting in the the account of the merchant 13 being credited 17a by the transaction amount and the account of the card holder 12 being debited by the transaction amount.

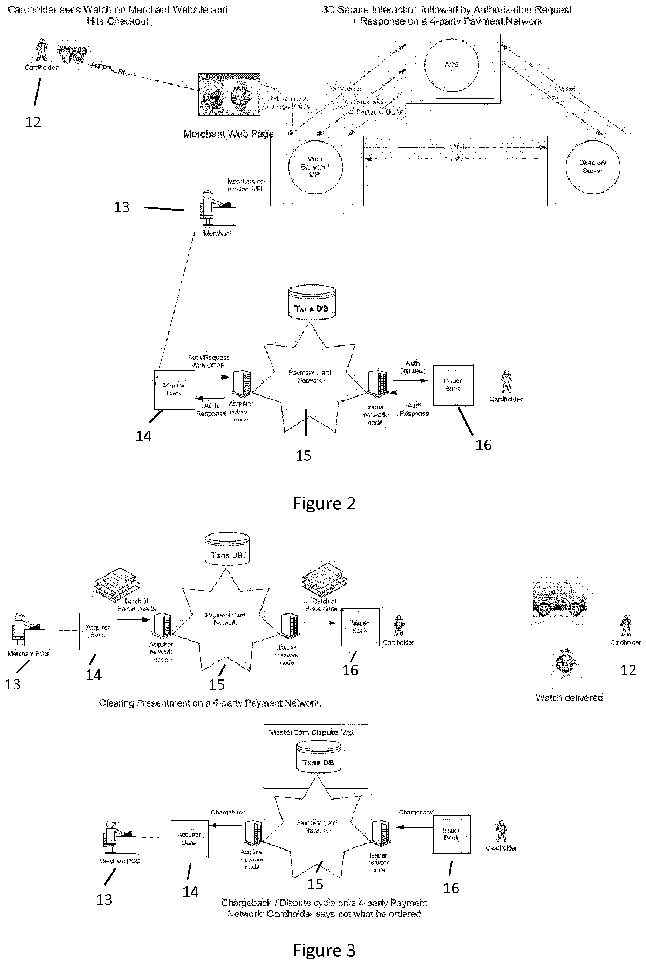

Figure 2 is a diagram illustrating a typical transaction in a 4-party payment card network 15 comprising the cardholder 12, merchant 13, acquirer 14 and card issuer 16. The cardholder 12 sees an item, for example, a watch, on a merchant website and proceeds to checkout. A 3D secure interaction followed by an authorisation request and response then ensues on the 4-party payment card network 15.

Payment cards can facilitate the performing of transactions electronically. The customer may use a payment card in conjunction with a merchant's device (e.g. an electronic point of sale) to perform a transaction with the merchant. For example, the customer may wish to purchase goods or services from the merchant, and so the customer may use the payment card to transfer funds or payment into the merchant's account in exchange for receiving the goods or services from the merchant.

Many methods for authentication, verification and validation of user activity as well as for user identity are currently employed. Such technologies are employed, for example, when an individual engages in some transaction that requires some level of security. An automated financial transaction is a typical example of a secure transaction requiring mechanisms to authenticate, verify and validate the identity of the user attempting to perform the transaction. Examples of such transactions include banking functions, for example using payment cards at a POS to make a purchase, that require some form of authentication, verification and validation.

Methods of authenticating individuals attempting a secure transaction include use of PIN numbers or some other type of information that is assumed to be known only by an authorised user involved in the transaction. Documentation may also be used to verify identity, such as a driver's license or other form of photo identification Biometric devices, such as fingerprint scanners, may be used to authenticate an individual attempting to perform a secure transaction.

Many existing fraud detection and prevention technologies can provide a false positive indication of fraudulent activity. Apart from the above-mentioned technologies, other technologies may be employed such as behavioural profiling that is used to detect anomalous behaviour. Examples of such unusual activities are when an individual uses a payment card to purchase some product or service in a foreign country where they have never previously performed a similar transaction. In another example, the amount of a particular transaction may be significantly different from any previous transaction. This behaviour may appear anomalous to a fraud detection system and the activity or transaction being performed may be terminated before any potential fraud is perpetrated. If this actually a false positive indication and the individual is actually an authorised user, the user suffers the consequences of a failed transaction and the service provider is considered to have provided a poor quality of service.

Chargeback is the return of funds to a consumer, forcibly initiated by the issuing bank of the instrument used by a consumer to settle a debt. Specifically, it is the reversal of a prior outbound transfer of funds from a consumer's bank account, line of credit, or credit card.

A chargeback in the card payment industry is a transaction initiated by an issuer on behalf of a cardholder in order to reverse a prior transaction. In a chargeback transaction it is the acquirer who gets debited for the chargeback and who then passes the debit onto the associated merchant. Chargebacks are an onerous and costly process for all concerned: cardholders, issuers, acquirers and merchants.

Chargebacks also occur in the distribution industry. This type of chargeback occurs when the supplier sells a product at a higher price to the distributor than the price they have set with the end user. The distributor then submits a chargeback to the supplier so they can recover the money lost in the transaction.

The issuer typically selects and submits a numeric reason code for each instance of chargeback. This feedback may help the merchant and acquirer diagnose errors and improve customer satisfaction. Reason codes vary by bank network, and may include the following general categories:
Technical: Expired authorization, non-sufficient funds, or bank processing error.
Clerical: Duplicate billing, incorrect amount billed, or refund never issued.
Quality: Consumer claims to have never received the goods as promised at the time of purchase.
Fraud: Consumer claims they did not authorize the purchase or identity theft.

Chargeback can result from customer disputes. For example, a customer may have returned an item to a merchant in return for credit, but credit was never posted to the account. A dispute may also arise if a customer does not receive items they have paid for or if the items were not what they expected. In this example, the merchant is responsible for issuing credit to its customer, and would be subject to a chargeback.

Figure 3 is a diagram illustrating clearing presentment in a 4-party payment card network 15 and a chargeback/dispute cycle when a cardholder 12 disputes an item they ordered. Referring to Figure 3, the item, for example, a watch, is delivered to the cardholder 12. The cardholder 12 then determines that the watch as received is not the watch the cardholder 12 expected. The cardholder 12 then proceeds to initiate a chargeback/dispute cycle. The chargeback/dispute cycle begins with the presentment for clearing and settlement of a transaction from the acquirer 14 to the issuer 16. If, for a specific reason, the issuer 16 determines that the transaction may be invalid, the issuer 16 may return the transaction to the acquirer 14 as a chargeback. In a chargeback transaction it is the acquirer 14 that gets debited for the chargeback and then passes the debit onto the associated merchant 13.

The problem being addressed by the present disclosure is how to eliminate or reduce a particular source of chargebacks as mentioned above - namely, goods and services not as described or expected. Such chargeback traffic is a source of increased traffic across the payment network which induces corresponding network latency.

### Summary of the Invention

The present disclosure provides a computer-implemented method as detailed in claim 1. Also provided are a computer-readable medium in accordance with claim 11, a user device according to claim 12, a computer-implemented method according to claim 14, and a dispute management module according to claim 15. Certain exemplary, advantageous features are provided in dependent claims.

### Brief Description of the Drawings

Figure 1 illustrates a payment card system for conducting a typical transaction;
Figure 2 is a diagram illustrating a typical transaction in a 4-party payment card network;
Figure 3 is a diagram illustrating clearing presentment in a 4-party payment card network and a chargeback/dispute cycle when a cardholder disputes an item they ordered;
Figure 4 is a flowchart illustrating a computer-implemented method for chargeback prevention, according to an embodiment of the present disclosure;
Figure 5 is a block diagram illustrating a payment card system for chargeback prevention, according to an embodiment of the present disclosure;
Figure 6 is a diagram illustrating clearing presentment in a 4-party payment card network and a chargeback/dispute cycle when a cardholder disputes an item they ordered, according to an embodiment of the present disclosure;
Figure 7 is a block diagram illustrating a configuration of a computing system including various hardware and software components that function to perform the methods according to embodiments of the present disclosure.

### Detailed Description

The present disclosure provides a computer-implemented method and system for chargeback prevention, the method comprising operating a processor associated with a user device to: receive a user selection of an item to be purchased; render a graphical representation of the item for the user; receive a user purchase authorisation based on the graphical representation; and transmit a transaction request for the item to an electronic transaction terminal, the transaction request comprising the user purchase authorisation.

The computer-implemented method may be embodied as part of an application or app on the user device. The electronic transaction terminal may include a point of sale (POS), i.e., the location where a retail transaction takes place.

In general, a payment card or data associated with a payment account may be provided to a merchant by a cardholder in order to fund a financial transaction, for example the purchase of goods or services, via by the associated payment account. Payment cards may include credit cards, debit cards, charge cards, stored-value cards, prepaid cards, fleet cards, virtual payment numbers, virtual card numbers, controlled payment numbers, etc. A payment card may be a physical card that may be provided to a merchant, or may be data representing the associated payment account.

A payment card financial transaction request comprises several transaction characteristics. These typically include:
- Merchant and Acquirer Identifiers
- Merchant Contact Information
- Transaction date and time
- PAN
- Product-specific-data i.e. Stock Keeping Unit (SKU) data

Alternatively e-commerce payments can be routed through payment gateways which may have an alternative Product / Goods Identifier instead of SKU.

A chargeback has an associated reason code. Examples of valid reason codes are those for which the cardholder dispute is based on assertions such as "Goods not as described" or "Wrong Item dispatched".

According to an embodiment of the present disclosure, prior to checkout a prospective purchaser is given the chance to demo an item by viewing a graphical representation of the product on a computing device associated with the purchaser. The computing device may comprise a physical terminal such as a portable computing device, for example a mobile device such as a laptop computer, a smartphone, or a tablet computer, or a desktop computer. The graphical representation of the product may comprise an augmented reality depiction of the product. The graphical representation of the product may be rendered on the user device, that is, on the user device used to process the payment transaction.

The item for purchase may be a wearable item such as a watch or an item of furniture such as a sofa. The prospective purchaser can thus see how the watch looks on their arm or if a particular sofa looks or fits well in their living room. The demo may include product specifics such as colour, shape, dimensions and other characteristics of the item. If the purchaser elects to proceed to checkout, the purchaser will be asked to provide a user purchase authorisation that the item specifics are to the satisfaction of the purchaser based on the graphical representation. In other words, the purchaser is providing a disclaimer that they are happy with the item prior to receiving the actual item. The purchaser is thus waiving the right to dispute the purchase on the basis of the above specified reasons.

The user purchase authorisation may be collected at the electronic transaction terminal. The user purchase authorisation is a data element to be included in the transaction request routed to the electronic transaction terminal, according to an embodiment of the present disclosure. The user purchase authorisation comprises a confirmation that the purchaser has authorised the item for sale and a disclaimer waiving the right to dispute the purchase on the basis of having experienced the item via the graphical representation. Subsequent presentment and chargeback can be linked to the authorization.

Dispute processing will take into consideration the selection of the user purchase authorisation by the cardholder.

The system benefits merchants and acquirers as it reduces a particular class of chargeback. The system also benefits cardholders and issuers as it ensures the item selected and shipped is that which the cardholder expects.

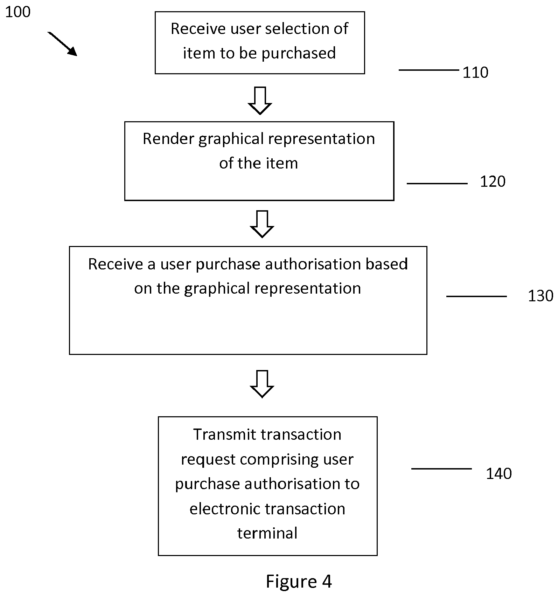

Figure 4 is a flowchart illustrating a computer-implemented method 100 for chargeback prevention, according to an embodiment of the present disclosure. Referring to Figure 4, the computer-implemented method 100 comprises: receiving a user selection of an item to be purchased 110; rendering a graphical representation of the item for the user 120; receiving a user purchase authorisation based on the graphical representation 130; and transmitting a transaction request for the item to an electronic transaction terminal, the transaction request comprising the user purchase authorisation 140.

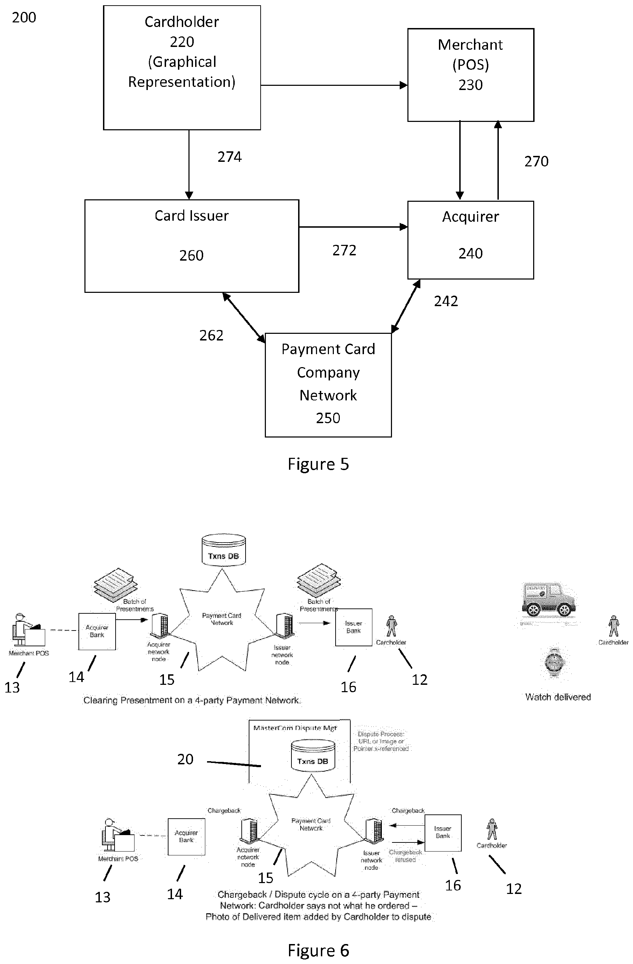

Figure 5 is a block diagram illustrating a payment card system 200 for chargeback prevention, according to an embodiment of the present disclosure. Referring to Figure 5, the payment card system 200 comprises a cardholder device 220, a merchant device 230, an acquirer 240, a payment card company network 250, and a card issuer 260.

On receipt of a user selection of an item to be purchased at the cardholder device 220, a graphical representation of the item is provided for the user. The graphical representation may be provided at the cardholder device 220. The graphical representation may be an augmented reality depiction of the item. As will be understood by those skilled in the art, augmented reality is a live direct or indirect view of a physical, real-world environment whose elements are augmented or supplemented by computer-generated sensory input such as sound, video, graphics or GPS data. The augmented reality presentation serves to provide the user with a realistic experience of the item prior to purchasing the product. If the cardholder is satisfied with the graphical representation, the cardholder will be asked to provide a user purchase authorisation that the item specifics are to their satisfaction based on the graphical presentation. In other words, the cardholder is providing a disclaimer that they are happy with the item prior to receiving the actual item. The cardholder is thus waiving the right to dispute the purchase on the basis of the above specified reasons. The user purchase authorisation may then be included in the transaction request to be submitted to the merchant device 230.

In a transaction, the cardholder device 220 submits the transaction request to the merchant device 230 relating to the item to be purchased. The transaction request may comprise transaction information data regarding a transfer of ownership of the item from one party to another. For example, the transaction information data may comprise a bill of sale. The transaction information data may comprise data about the item for sale, an amount, one or more identifiers comprising an identifier of a payer device, an identifier of a payee device, and additional data including the user purchase authorisation described above. The payer device, that is, the cardholder device 220, may comprise a physical terminal such as a portable computing device, for example a mobile device such as a laptop computer, a smartphone, or a tablet computer, or a desktop computer. The payee device may be a device associated with the merchant who may be providing goods or services for sale. The merchant device 230 may comprise a physical terminal such as a portable computing device (e.g. a laptop computer, a smartphone, a tablet computer etc.); a desktop computer; a Point of Sale (POS) or merchant terminal, for example located a terminal located at a physical point of sale such as a shop or restaurant, or an ATM. Alternatively, the merchant or payee device may be a terminal associated with a virtual Point Of Sale, e.g. a POS at which online purchases or payments may be made.

The merchant device 230, via a POS device, is configured to communicate with the acquirer 240, which functions as a payment processor. The acquirer 240 initiates 242 a transaction with the payment card company network 250. The payment card company network 250, which may include a financial transaction processing company, routes 262 the transaction to the card issuer 260. The payment card company network 250 may comprise any network across which communications can be transmitted and received. For example, the payment card company network 250 may comprise a wired or wireless network. The payment card company network 250 may, for example, comprise one or more of: the Internet; a local area network; a mobile or cellular network; a mobile data network or any other suitable type of network. The card issuer 260 may be identified using information in the transaction request.

The card issuer 260 approves or denies the transaction request, and then routes, via the payment card company network 250, an authorization response back to the acquirer 240. The acquirer 240 sends approval to the merchant device 230 via the POS device. If the transaction is approved, the cardholder completes the purchase and may receive a receipt. The account of the merchant is credited 270 by the acquirer 240. The card issuer 260 pays 272 the acquirer 240. Finally, the cardholder device 220 pays 274 the card issuer 260.

The transaction request may also include transaction information data and payment information. The payment information may include information associated with the cardholder, such as name, contact information, for example, residential address, phone number, e-mail address, demographic information, or any other suitable information associated with the cardholder. Further, in accordance with an embodiment of the present disclosure, the transaction request may also include a user purchase authorisation as described above.

The transaction request may also comprise transaction information data regarding the transfer of ownership of the item from one party to another. The transaction information data may comprise data about the item for sale, an amount, one or more identifiers comprising an identifier of a payer device, an identifier of a payee device, and additional data.

Figure 6 is a diagram illustrating clearing presentment in a 4-party payment card network and a chargeback/dispute cycle when a cardholder disputes an item they ordered, according to an embodiment of the present disclosure. Referring to Figure 6, the item, for example, a watch, is delivered to the cardholder 12. The cardholder 12 then decides that the item as received is not the item the cardholder 12 expected. The cardholder 12 then proceeds to initiate a chargeback/dispute cycle for processing at a dispute management module 20. The chargeback/dispute cycle begins with the presentment for clearing and settlement of a transaction from the acquirer 14 to the issuer 16. The chargeback may be reversed by supplying proof that the item received fit the description at the time of the purchase, proof that the deficiency that led to the dispute has been corrected, a statement that neither returned or attempted to return merchandise, or evidence that a credit was issued. The chargeback can be avoided by ensuring the customer clearly understands what they are purchasing and is aware of any applicable return or refund policies. The cardholder may supply a photograph of the delivered item to dispute the purchase.

In an embodiment of the present disclosure, the dispute management module 20 may refuse a chargeback if the transaction request included a user purchase authorisation as described above, despite the cardholder supplying a photograph of the delivered item to dispute the purchase. In effect, the cardholder or purchaser has already provided a disclaimer that they were happy with the item prior to receiving the actual item. The purchaser has thus waived the right to dispute the purchase on the basis of the above specified reasons. The dispute management module 20 is thus configured to check for the presence of a user purchase authorisation in the transaction request, and refuses the chargeback request if the transaction request includes a user purchase authorisation.

The method and system of the present disclosure benefits merchants and acquirers as it reduces a particular class of chargeback as detailed above, and also benefits cardholders and issuers as it ensures that items selected and shipped are those which the cardholder expects.

The present disclosure also provides a computer-implemented method for chargeback prevention in a payment card transaction performed in a payment card network comprising an acquirer, an issuer, a cardholder device, a merchant device, and a dispute management module, the method comprising operating one or more processors associated with the dispute management module to: receive a chargeback request from the cardholder device; determine if a transaction request associated with the chargeback request comprises a user purchase authorisation based on a graphical representation of an item provided to the cardholder prior to purchase of the item; refuse the chargeback request if the transaction request comprises the user purchase authorisation.

Also provided is a dispute management module comprising one or more processors configured to receive a chargeback request from the cardholder device; determine if a transaction request associated with the chargeback request comprises a user purchase authorisation based on a graphical representation of an item provided to the cardholder prior to purchase of the item; refuse the chargeback request if the transaction request comprises the user purchase authorisation.

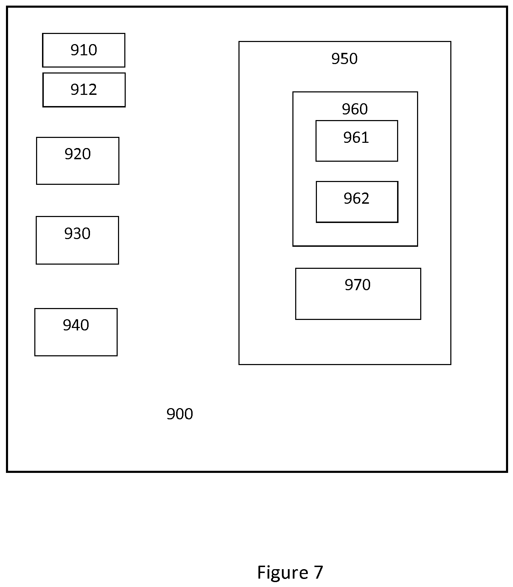

Figure 7 is a block diagram illustrating a configuration of a computing system 900. The computing system 900 includes various hardware and software components that function to perform the methods according to embodiments of the present disclosure.

For example, the computing system 900 may be embodied on the user device or cardholder device described above to perform the above-described method for chargeback prevention in a payment card transaction, according to an embodiment of the present disclosure. Also, the computing system 900 may be embodied on the dispute management module described above to perform the above-described method for chargeback prevention in a payment card transaction.

Referring to Figure 6, the computing system 900 comprises a user interface 910, a processor 920 in communication with a memory 950, and a communication interface 930. The processor 920 functions to execute software instructions that can be loaded and stored in the memory 950. The processor 920 may include a number of processors, a multi-processor core, or some other type of processor, depending on the particular implementation. The memory 950 may be accessible by the processor 920, thereby enabling the processor 920 to receive and execute instructions stored on the memory 950. The memory 950 may be, for example, a random access memory (RAM) or any other suitable volatile or non-volatile computer readable storage medium. In addition, the memory 950 may be fixed or removable and may contain one or more components or devices such as a hard drive, a flash memory, a rewritable optical disk, a rewritable magnetic tape, or some combination of the above.

One or more software modules 960 may be encoded in the memory 950. The software modules 960 may comprise one or more software programs or applications having computer program code or a set of instructions configured to be executed by the processor 920. Such computer program code or instructions for carrying out operations for aspects of the systems and methods disclosed herein may be written in any combination of one or more programming languages.

The software modules 960 may be configured to be executed by the processor 920. During execution of the software modules 960, the processor 920 configures the system 900 to perform various operations relating to the facilitating and processing of transactions according to embodiments of the present disclosure, as has been described above.

Other information and/or data relevant to the operation of the present systems and methods, such as a transaction database 970, may also be stored on the memory 950. The transaction database 970 may contain and/or maintain various data items and elements that are utilized throughout the various operations of the system described above. The information stored in the database 970 may include but is not limited to, credit card details and billing information unique to the consumer and/or payment method, personal information for each consumer, banking information and a history of transactions by the consumer. One or more digital wallets may be stored in the transaction database 970. It should be noted that although the transaction database 970 is depicted as being configured locally to the computer system 900, in certain implementations the transaction database 970 and/or various other data elements stored therein may be located remotely. Such elements may be located on a remote device or server - not shown, and connected to the computer system 900 through a network in a manner known to those skilled in the art, in order to be loaded into a processor and executed.

Further, the program code of the software modules 960 and one or more computer readable storage devices (such as the memory 950) form a computer program product that may be manufactured and/or distributed in accordance with the present disclosure, as is known to those of skill in the art.

The communication interface 940 is also operatively connected to the processor 920 and may be any interface that enables communication between the computer system 900 and external devices, machines and/or elements as described above. The communication interface 940 is configured for transmitting and/or receiving data. For example, the communication interface 940 may include but is not limited to a Bluetooth, or cellular transceiver, a satellite communication transmitter/receiver, an optical port and/or any other such, interfaces for wirelessly connecting the computer system to other devices.

The user interface 910 is also operatively connected to the processor 920. The user interface may comprise one or more input device(s) such as switch(es), button(s), key(s), and a touchscreen.

The user interface 910 functions to facilitate the capture of commands from the user such as an on-off commands or settings related to operation of the payment system.

A display 912 may also be operatively connected to the processor 920. The display 912 may include a screen or any other such presentation device that enables the user to view various options, parameters, and results. The display 912 may be a digital display such as an LED display. The user interface 910 and the display 912 may be integrated into a touch screen display.

The operation of the computer system 900 and the various elements and components described above will be understood by those skilled in the art with reference to the method and system according to the present disclosure.

The present disclosure is not limited to the embodiment(s) described herein but can be amended or modified without departing from the scope of the present disclosure. Additionally, it will be appreciated that in embodiments of the present disclosure some of the above-described steps may be omitted and/or performed in an order other than that described.

## Claims

1. A computer-implemented method for chargeback prevention in a payment card transaction, the method comprising operating a processor associated with a user device with which the payment card is associated to:
receive a user selection of an item to be purchased;
render a graphical representation of the item for the user;
receive a user purchase authorisation based on the graphical representation; and
transmit a transaction request for the item to an electronic transaction terminal, the transaction request comprising the user purchase authorisation.

2. The method of claim 1, wherein the graphical representation of the item comprises an augmented reality depiction of the item.

3. The method of claim 2, comprising rendering the augmented reality depiction for a wearable display system.

4. The method of claim 3, wherein the wearable display system comprises a head mounted display (HMD).

5. The method of any preceding claim, wherein the graphical representation of the item comprises colour, shape and dimensions of the item.

6. The method of any preceding claim, comprising rendering the graphical representation of the item on the user device.

7. The method of any preceding claim, wherein the user device comprises a mobile device, a smartphone, a tablet computer, a laptop computer, or a desktop computer.

8. The method of any preceding claim, wherein the electronic transaction terminal comprises a point of sale (POS) associated with a merchant.

9. The method of any preceding claim, wherein the payment card is associated with a credit card account, a debit card account, a checking account, a savings account, or a loyalty rewards account.

10. The method of any preceding claim, wherein the transaction request comprises payment and shipping information associated with the cardholder.

11. A computer-readable medium comprising non-transitory instructions which, when executed, cause a processor to perform the method according to any one of claims 1 to 10.

12. A user device comprising at least one processor configured to perform the method according to any one of claims 1 to 10.

13. The user device of claim 12, comprising a mobile device, a smartphone, a tablet computer, a laptop computer, or a desktop computer.

14. A computer-implemented method for chargeback prevention in a payment card transaction performed in a payment card network comprising an acquirer, an issuer, a cardholder device, a merchant device, and a dispute management module, the method comprising operating one or more processors associated with the dispute management module to:
receive a chargeback request from the cardholder device;
determine if a transaction request associated with the chargeback request comprises a user purchase authorisation based on a graphical representation of an item provided to the cardholder prior to purchase of the item;
refuse the chargeback request if the transaction request comprises the user purchase authorisation.

15. A dispute management module for chargeback prevention in a payment card transaction performed in a payment card network comprising an acquirer, an issuer, a cardholder device, and a merchant device, the dispute management module comprising one or more processors configured to:
receive a chargeback request from the cardholder device;
determine if a transaction request associated with the chargeback request comprises a user purchase authorisation based on a graphical representation of an item provided to the cardholder prior to purchase of the item;
refuse the chargeback request if the transaction request comprises the user purchase authorisation.
